# EUROPEAN PATENT SPECIFICATION

(11) **EP 3 277 579 B1**
(45) Date of publication and mention of the grant of the patent: **07.10.2026**
(21) Application number: 16774064.6
(22) Date of filing: 30.03.2016
(51) Int. Cl.: E03F 1/00, B64D 11/02

(54) **AIRCRAFT VACUUM TOILET SYSTEM SPLASHGUARD**
SPRITZSCHUTZ FÜR VAKUUMTOILETTENSYSTEM EINES FLUGZEUGS
PARE-ÉCLABOUSSURES D'UN SYSTÈME DE TOILETTES À ASPIRATION DANS UN AVION

(30) Priority: 30.03.2015 US 201562140260 P
(43) Date of publication of application: 07.02.2018
(73) Proprietor: B/E Aerospace Inc., Winston Salem, NC 27105 (US)
(72) Inventor: HARDWICK, Christopher, Roscoe, IL 61073 (US); HOANG, Thao, Rockford, IL 61103 (US); BUNIAK, Bradley, J., Schaumburg, IL 60193 (US); KURSHINSKY, Christian, C., Rockford, IL 61104 (US)
(74) Representative: Boult Wade Tennant LLP
(86) International application number: PCT/US2016/024909
(87) International publication number: WO 2016/160920

(56) References cited:
- US-A- 5 625 905
- US-A- 5 625 905
- US-A1- 2001 034 902
- US-A1- 2012 066 824
- US-A1- 2014 137 319
- US-A1- 2014 208 498
- US-A1- 2014 223 655
- US-B1- 6 763 531
- US-B2- 6 977 005
- US-B2- 7 690 053

## Description

### Field of the Disclosure

The present disclosure relates generally to vacuum toilet systems and, more generally, to a splashguard for such systems.

### Background

Designing a toilet for an aircraft poses challenges that do not generally occur in ground-based toilet designs. For instance, in an aircraft, space and weight are at a premium, and using regular water-flush toilets is not practical. There are additional drawbacks associated with existing systems. For instance, existing systems allow waste material to splash up under the shroud and over the toilet bowl, and producing an odor and potentially corrosion related damage. Also, performing routine maintenance and cleaning is much more difficult, since space restrictions make access to plumbing nearly impossible. Examples of existing prior art include US 5 625 905, which relates to a urine deflector for eliminating the splatter of urine on surfaces of a toilet bowl and toilet seat; US 2001/034902, which relates to a vacuum-operated waste disposal toilet system; US2014/223655, which relates to a urine guard that is removably positionable on a toilet bowl; US 2014/137319, which relates to quick release toilet concepts. DE 10 2005 051 584 discloses a removable splash guard used with toilets on-board an aircraft.

A removable toilet splash guard according to a first aspect of the present invention is as defined in claim 1. A toilet bowl system in accordance with a second aspect of the present invention is as defined in claim 3.

While the appended claims set forth the features of the present techniques with particularity, these techniques may be best understood from the following detailed description taken in conjunction with the accompanying drawings of which:
FIG. 1 is a perspective view of a toilet system configured according to an embodiment.
FIG. 2A is a bottom view of a toilet splashguard according to an embodiment.
FIG. 2B is a partial cross-section view of the toilet splashguard taken across section line 2B, according to an embodiment.
FIG. 3 is an enlarged view illustrating an interaction between the toilet splashguard and a rim of the toilet bowl, according to an embodiment.
FIG. 4A is a cross-section view of airflow between the splashguard and toilet shroud during a resting state of the splashguard according to an embodiment.
FIG. 4B is a cross-section view of airflow between the splashguard and toilet shroud during a flushing sequence according to an embodiment.

### Detailed Description

The following discussion is directed to various exemplary embodiments. However, one possessing ordinary skill in the art will understand that the examples disclosed herein have broad application, and that the discussion of any embodiment is meant only be exemplary of that embodiment, and not intended to suggest that the scope of the disclosure, including claims, is limited to that embodiment.

Certain terms are used throughout the following description to refer to particular features or components. As one skilled in the art will appreciate, different persons may refer to the same feature or component by different names. This document does not intend to distinguish between components or features that differ in name but not function. The drawing figures are not necessarily to scale. Certain features and components herein may be shown exaggerated in scale or in somewhat schematic form and some details of conventional elements may not be shown in interest of clarity and conciseness.

The disclosure is generally directed to a toilet bowl system for use on-board an aircraft. A toilet bowl body comprises a toilet shroud and a toilet bowl having a rim portion. A removable splash guard is positioned between the toilet bowl and the shroud and comprises a generally flat, flexible, planar shield having a central opening. The shield includes a top portion and a rear portion, where the top portion faces the shroud and the lower portion faces the toilet bowl. The lower portion is shaped to correspond with an upper portion of the rim of the toilet bowl and is configured to secure the removable toilet splash guard to the toilet bowl. In addition, the lower portion of the planar shield has the added benefit of sealing against the toilet bowl and thereby preventing waste migration from inside the toilet bowl to the outside.

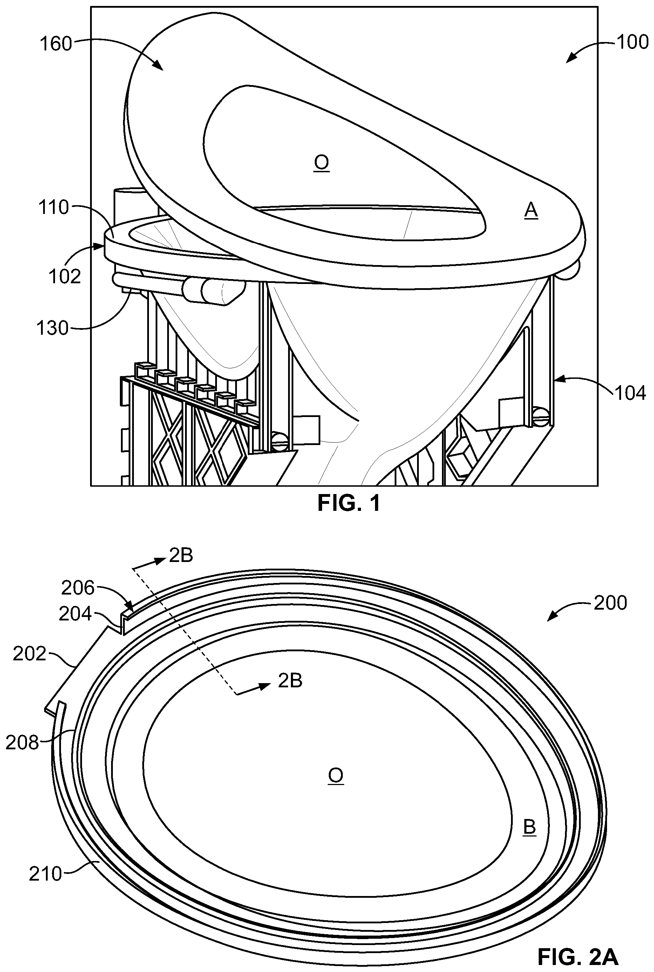

Turning to FIG. 1, a toilet system configured according to an embodiment is shown. The toilet, generally labelled 100, is configured to be deployed on an aircraft, and may be housed within an external housing (not shown). The toilet 100 includes a bowl 102 attached to a frame 104. The bowl 102 includes a rim 110. The toilet 100 also includes a fluid control valve 130 provided in the vicinity of the rim 110.

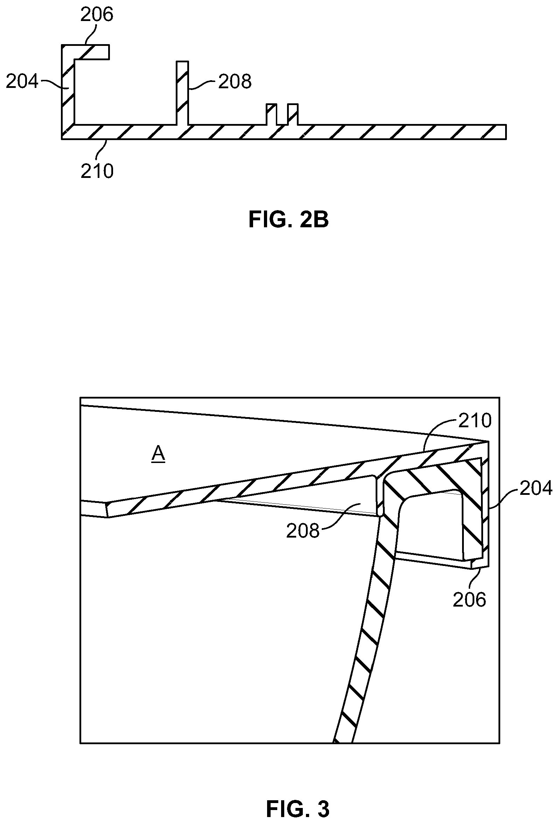

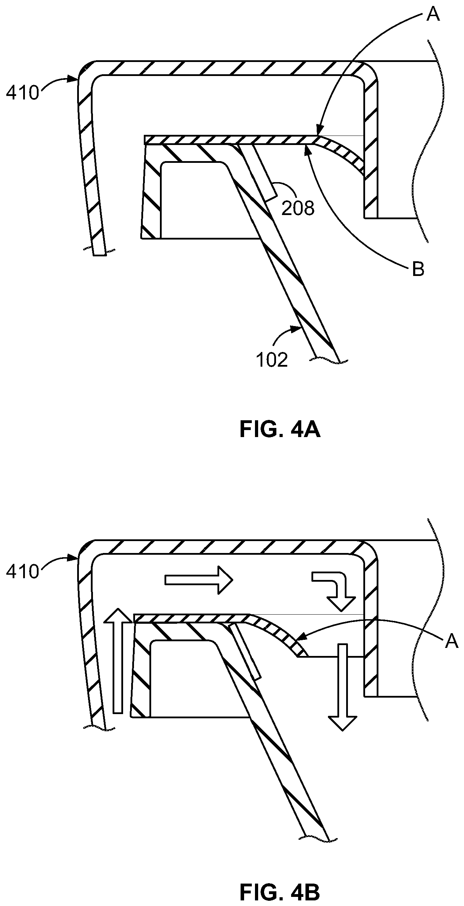

The toilet 100 further includes a removable splash guard 160 positioned between the toilet bowl 102 and the shroud 410 (shown in Fig. 4). The splash guard 160 is a generally flat, flexible, planar shield having a central opening O, a top portion A, and a bottom portion B (illustrated in FIG. 2A). Next, the structure of the splash guard 160 will be described in more detail with references to FIGS. 2A, 2B and 3.

Referring now to FIG. 2A, a splash guard 160 configured according to an embodiment of the toilet system 200 is shown. The lower portion B of the splash guard 160 includes a first ridge 204 extending along an outside circumferential edge 210 of the shield and extending substantially perpendicular to the planar shield. As can be seen more clearly in FIG. 3, the first ridge 204 extends downward in a substantially perpendicular direction relative to the outside circumferential edge 210.

Turning back to FIGS. 2A and 2B, the lower portion B of the splash guard 160 includes a second ridge 208 extending concentric to the first ridge 204 and also extending substantially perpendicular to the planar shield. As can be seen more clearly in FIG. 3, the second ridge 208 also extends downward in a substantially perpendicular direction relative to the outside circumferential edge 210. According to an embodiment, the first ridge 204 and the second ridge 208 are axially spaced apart from each other. As shown in FIG. 3, the rim 110 of the toilet bowl 102 is configured to fit in the axial space between the first ridge 204 and the second ridge 208 according to one embodiment. According to some embodiments, the lower portion B along with the second ridge 208 helps seal the toilet splash guard 160 against the toilet bowl 102 in order to prevent waste from migrating outside the toilet bowl 102.

As shown in FIGS. 2A and 2B, the first ridge 204 includes a lip 206 that extends substantially perpendicularly from a free end of the first ridge 204. As can be seen more clearly in FIG. 3, the lip 206 extends towards the central opening O of the planar shield. According to one embodiment illustrated in FIG. 3, the lip 206 of the first ridge 204 is configured to overlap a portion of the rim 110 of toilet bowl 102 to secure the removable toilet splash guard 160 to the toilet bowl 102. A person skilled in the art will understand that various other mechanisms for retaining the removable toilet splash guard 160 to the toilet bowl 102 may be used instead of or in addition to the mechanism discussed above. For instance, in an embodiment, a plurality of removable fasteners may be used to secure the removable toilet splash guard 160 to the toilet bowl 102.

Turning now to FIG. 4A, the removable splash guard 160 is configured to be positioned between the toilet shroud 410 and the toilet bowl 102. In an embodiment, the lower portion B of the removable splash guard 160 is configured to substantially block waste disposed into the toilet bowl 102 from contacting the shroud 410, as shown in FIG 4A.

In an embodiment, an air gap is present between the toilet shroud and the top of the vacuum toilet bowl to ensure that a negative pressure is not exerted on the passenger if they form a seal between their body and the toilet shroud in use. However, in conventional toilet systems, this air gap allows waste material to splash up under the shroud and over the bowl. If not properly or regularly cleaned, this build-up can produce a foul smell / odor behind the shroud.

According to an embodiment of the toilet system disclosed here, the removable splash guard 160 is configured to prevent both liquid and solid waste from splashing up under the toilet shroud 410, and over the top of the toilet bowl 102, while still providing adequate vacuum breaker (air gap) protection for the passenger.

More specifically, as illustrated in FIG. 4A, the removable toilet splash guard 160 is designed to prevent waste material from splashing under the toilet shroud 410 by closing the gap between the toilet bowl 102 and the toilet shroud 410. According to the invention, the removable toilet splash guard 160 acts like a check valve and prevents waste from splashing up under the shroud 410 but allows air to enter the toilet if a seal has been formed between the occupant and the shroud 410. As can be seen more clearly in FIG. 4B, an airflow path (indicated by the arrows) connecting the outside and the inside of the toilet bowl 102 is created due to the flexibility of the removable toilet splash guard 160, during a flushing sequence.

Moreover, the toilet splash guard 160 can be easily washed with the current toilet cleaning brush to remove any waste which splashes up to the toilet splash guard 160. Over time, the toilet splash guard 160 may be replaced easily by replacing the removable plastic toilet bowl 102 or replacing the splash guard 160 directly. The splash guard 160 is designed for ease of assembly and removal to the top of the toilet bowl 102. According to an embodiment, the flexible planar shield of the splash guard 160 may be customizable to meet the particular shroud opening. This may be done with specific tooling or trim tooling at the time of manufacture, or by producing templates for trimming in the field.

## Claims

1. A removable toilet splash guard (160) for use with toilets on-board an aircraft comprising: a generally flat, flexible, planar shield having a central opening (O), wherein the shield includes a top portion (A) and a lower portion (B), the top portion (A) is configured to face a user and the lower portion is configured to face a toilet bowl, and the lower portion is shaped to correspond with an upper portion (B) of a rim of the toilet bowl and is configured to secure the removable toilet splash guard (160) to the toilet bowl (110) to substantially block waste disposed into the toilet bowl from splashing up under a toilet shroud, in use, wherein the part of the shield surrounding the central opening (O) is flexible so as to cooperate with the shroud (410) to act like a check valve and to maintain an airflow path between the shroud (410) and the splash guard (160) into the toilet bowl (102) if the central opening (O) is sealed, in use;
wherein the lower portion of the shield includes:
a first ridge (204) extending along an outside circumference of the shield and extending substantially perpendicular to the planar shield, and
a second ridge (208) extending concentric to the first ridge (204) and also extending substantially perpendicular to the planar shield: and
wherein the first ridge (204) includes a free end at the opposite end to the planar shield,
**characterised in that**
a lip (206) extends substantially perpendicularly from the free end of the first ridge and extends towards the central opening (O) of the planar shield.

2. A removable toilet splash guard according to claim 1, wherein
the lip (206) of the first ridge (204) is configured to overlap a portion of the rim (110) of toilet bowl (102) to secure the removable toilet splash guard (160) to the toilet bowl.

3. A toilet bowl system for use on-board an aircraft, the system comprising:
a toilet bowl body comprising a toilet bowl (102) and a shroud (410); the toilet bowl comprising a rim (110);
a removable splash guard (160) according to claim 1 positioned between the toilet bowl (102) and the shroud (410).

4. The system of claim 3,
wherein the rim (110) of the toilet bowl (102) is configured to fit in a space between the first ridge (204) and the second ridge (208).

5. The system of claim 3, wherein
the lip (206) of the first ridge (204) is configured to overlap a portion of the rim (110) of toilet bowl (102) to secure the removable toilet splash guard to the toilet bowl.

6. The system of claim 3,
wherein the removable splash guard (160) is secured to the rim (110) of the toilet bowl (102) by removable fasteners.

7. The system of claim 3,
wherein a shape of the removable splash guard (160) is customizable to correspond to an opening of the shroud (410).

## Patentansprüche

1. Abnehmbarer Spritzschutz (160) für Toiletten zur Verwendung mit Toiletten an Bord eines Luftfahrzeugs, umfassend: einen im Allgemeinen flachen, flexiblen, planaren Schild, der eine zentrale Öffnung (O) aufweist, wobei
der Schild einen oberen Abschnitt (A) und einen unteren Abschnitt (B) einschließt,
der obere Abschnitt (A) so konfiguriert ist, dass er einem Benutzer zugewandt ist, und der untere Abschnitt so konfiguriert ist, dass er einer Toilettenschüssel zugewandt ist, und
der untere Abschnitt so geformt ist, dass er mit einem oberen Abschnitt (B) eines Randes der Toilettenschüssel übereinstimmt und dazu konfiguriert ist, den abnehmbaren Spritzschutz (160) für Toiletten an der Toilettenschüssel (110) zu befestigen, um im Wesentlichen zu verhindern, dass in die Toilettenschüssel eingebrachte Abfälle unter eine Toilettenabdeckung hinauf spritzen, während des Gebrauchs, wobei der Teil des Schilds, der die zentrale Öffnung (O) umgibt, flexibel ist, um mit der Abdeckung (410) zusammenzuwirken und wie ein Rückschlagventil zu wirken sowie einen Luftstrompfad zwischen der Abdeckung (410) und dem Spritzschutz (160) in die Toilettenschüssel (102) aufrechtzuerhalten, wenn die zentrale Öffnung (O) abgedichtet ist, während des Gebrauchs;
wobei der untere Abschnitt des Schildes Folgendes einschließt:
einen ersten Steg (204), der sich entlang eines äußeren Umfangs des Schildes und im Wesentlichen senkrecht zu dem planaren Schild erstreckt, und
einen zweiten Steg (208), der sich konzentrisch zum ersten Steg (204) erstreckt und sich ebenfalls im Wesentlichen senkrecht zu dem planaren Schild erstreckt; und
wobei der erste Steg (204) ein freies Ende am gegenüberliegenden Ende relativ zu dem planaren Schild einschließt,
**dadurch gekennzeichnet, dass**
eine Lippe (206) sich im Wesentlichen senkrecht vom freien Ende des ersten Stegs erstreckt und sich in Richtung der zentralen Öffnung (O) des planaren Schildes erstreckt.

2. Abnehmbarer Spritzschutz für Toiletten nach Anspruch 1, wobei
die Lippe (206) des ersten Stegs (204) so konfiguriert ist, dass sie einen Abschnitt des Randes (110) der Toilettenschüssel (102) überlappt, um den abnehmbaren Spritzschutz (160) für Toiletten an der Toilettenschüssel zu befestigen.

3. Toilettenschüsselsystem zur Verwendung an Bord eines Luftfahrzeugs, wobei das System Folgendes umfasst:
einen Toilettenschüsselkörper, der eine Toilettenschüssel (102) und eine Abdeckung (410) umfasst; wobei die Toilettenschüssel einen Rand (110) umfasst;
einen abnehmbaren Spritzschutz (160) nach Anspruch 1, der zwischen der Toilettenschüssel (102) und der Abdeckung (410) angeordnet ist.

4. System nach Anspruch 3, wobei der Rand (110) der Toilettenschüssel (102) so konfiguriert ist, dass er in einen Raum zwischen dem ersten Steg (204) und dem zweiten Steg (208) passt.

5. System nach Anspruch 3, wobei die Lippe (206) des ersten Stegs (204) so konfiguriert ist, dass sie einen Abschnitt des Randes (110) der Toilettenschüssel (102) überlappt, um den abnehmbaren Spritzschutz für Toiletten an der Toilettenschüssel zu befestigen.

6. System nach Anspruch 3, wobei der abnehmbare Spritzschutz (160) mit abnehmbaren Befestigungselementen am Rand (110) der Toilettenschüssel (102) befestigt ist.

7. System nach Anspruch 3, wobei die Form des abnehmbaren Spritzschutzes (160) so anpassbar ist, dass sie einer Öffnung der Abdeckung (410) entspricht.

## Revendications

1. Pare-éclaboussures amovible pour toilettes (160) destiné à être utilisé dans des toilettes à bord d'un aéronef, comprenant : une protection globalement plate, souple et plane présentant une ouverture centrale (O), dans lequel
la protection inclut une partie supérieure (A) et une partie inférieure (B),
la partie supérieure (A) est configurée pour faire face à un utilisateur et la partie inférieure est configurée pour faire face à une cuvette de toilettes, et
la partie inférieure est conçue pour correspondre à une partie supérieure (B) du rebord de la cuvette de toilettes et est configurée pour fixer le pare-éclaboussures amovible (160) à la cuvette de toilettes (110) afin d'empêcher sensiblement les déchets jetés dans la cuvette de toilettes d'éclabousser sous l'enveloppe de toilettes, en utilisation, dans lequel la partie de la protection entourant l'ouverture centrale (O) est souple afin de coopérer avec l'enveloppe (410) pour agir comme un clapet anti-retour et maintenir un trajet d'air entre l'enveloppe (410) et le pare-éclaboussures (160) dans la cuvette de toilettes (102) si l'ouverture centrale (O) est scellée, en utilisation ;
dans lequel la partie inférieure de la protection inclut :
une première crête (204) s'étendant le long d'une circonférence extérieure de la protection et s'étendant sensiblement perpendiculairement à la protection plane, et
une seconde crête (208) s'étendant de manière concentrique à la première crête (204) et s'étendant également sensiblement perpendiculairement à la protection plane : et
dans lequel la première crête (204) inclut une extrémité libre au niveau de l'extrémité opposée à la protection plane,
**caractérisé en ce que**
une lèvre (206) s'étend sensiblement perpendiculairement à partir de l'extrémité libre de la première crête et s'étend vers l'ouverture centrale (O) de la protection plane.

2. Pare-éclaboussures amovible pour toilettes selon la revendication 1, dans lequel
la lèvre (206) de la première crête (204) est configuré pour chevaucher une partie du rebord (110) de la cuvette de toilettes (102) afin de fixer le pare-éclaboussures amovible de toilettes (160) à la cuvette de toilettes.

3. Système de cuvette de toilettes destiné à être utilisé à bord d'un aéronef, le système comprenant :
un corps de cuvette de toilettes comprenant une cuvette de toilettes (102) et une enveloppe (410) ; la cuvette de toilettes comprenant un rebord (110) ;
un pare-éclaboussures amovible (160) selon la revendication 1 positionné entre la cuvette de toilettes (102) et l'enveloppe (410).

4. Système selon la revendication 3, dans lequel le rebord (110) de la cuvette de toilettes (102) est configuré pour s'insérer dans un espace entre la première crête (204) et la seconde crête (208).

5. Système selon la revendication 3, dans lequel la lèvre (206) de la première crête (204) est configurée pour chevaucher une partie du rebord (110) de la cuvette de toilettes (102) afin de fixer le pare-éclaboussures amovible de toilettes à la cuvette de toilettes.

6. Système selon la revendication 3, dans lequel le pare-éclaboussures amovible (160) est fixé au rebord (110) de la cuvette de toilettes (102) par des fixations amovibles.

7. Système selon la revendication 3, dans lequel la forme du pare-éclaboussures amovible (160) est personnalisable pour correspondre à une ouverture de l'enveloppe (410).
